# EUROPEAN PATENT SPECIFICATION

(11) **EP 3 789 195 B1**
(45) Date of publication and mention of the grant of the patent: **20.08.2025**
(21) Application number: 19796967.8
(22) Date of filing: 26.04.2019
(51) Int. Cl.: C08L 1/16, C08L 1/04, C08L 101/02, C08J 7/048, C08J 7/043, C08B 5/14, C08B 15/02, B32B 27/36, B32B 27/16, B32B 27/10

(54) **NANOCELLULOSE-CONTAINING MOLDED ARTICLE AND PRODUCTION METHOD THEREFOR**
NANOCELLULOSEHALTIGER FORMARTIKEL UND HERSTELLUNGSVERFAHREN DAFÜR
ARTICLE MOULÉ CONTENANT UNE NANOCELLULOSE ET SON PROCÉDÉ DE PRODUCTION

(30) Priority: 02.05.2018 JP 2018088839
(43) Date of publication of application: 10.03.2021
(73) Proprietor: Toyo Seikan Group Holdings, Ltd., Shinagawa-ku Tokyo 141-8627 (JP)
(72) Inventor: KINOSHITA, Yuuki, Yokohama-shi, Kanagawa 240-0062 (JP); NAGAHAMA, Hideaki, Yokohama-shi, Kanagawa 240-0062 (JP); YAMADA, Toshiki, Yokohama-shi, Kanagawa 230-0001 (JP)
(74) Representative: J A Kemp LLP
(86) International application number: PCT/JP2019/017939
(87) International publication number: WO 2019/212044

(56) References cited:
- EP-A1- 3 854 819
- EP-A1- 3 872 127
- WO-A1-2017/179729
- WO-A1-2017/199252
- WO-A1-2018/033584
- JP-A- 2012 046 843
- JP-A- 2014 079 938
- JP-A- 2014 190 744
- JP-A- 2014 190 744
- JP-A- 2014 223 737
- JP-A- 2017 512 164
- DATABASE WPI Week 201469, 6 October 2014 Derwent World Patents Index; AN 2014-S10872, XP002805322
- DATABASE WPI Week 201482, 4 December 2014 Derwent World Patents Index; AN 2014-V51159, XP002805323
- ABDUL KHALIL H.P.S. ET AL: "Production and modification of nanofibrillated cellulose using various mechanical processes: A review", CARBOHYDRATE POLYMERS, vol. 99, 2 September 2013 (2013-09-02), pages 649 - 665, XP055831775, DOI: 10.1016/j.carbpol.2013.08.069
- DATABASE WPI Week 201433, 8 May 2014 Derwent World Patents Index; AN 2014-H88451, XP002805324

## Description

### Technical Field:

The present invention relates to a nanocellulose-containing product and a method for producing the same. More particularly, the present invention relates to a nanocellulose-containing product imparted with an improved interfacial peeling strength with respect to a substrate while keeping an excellent gas barrier property of the nanocellulose, and a method for producing the same.

### Background Art:

It has been proposed to use nanocellulose as an advanced biomass feedstock for various applications such as a functional additive and a film composite. In particular, it is known that materials such as a film made of cellulose nanofibers or a laminate containing cellulose nanofibers can prevent or reduce dissolution and diffusion of a gas due to its hydrogen bond between the cellulose fibers and its strong crosslinking interactions, thereby exhibiting an excellent gas barrier property like an oxygen barrier property. Therefore, barrier materials utilizing the cellulose nanofibers have been proposed.

For instance, Patent Document 1 below discloses a gas barrier material containing a cellulose fiber having an average fiber diameter of 200 nm or less and an aspect ratio in a range of 10 to 10000. The content of the carboxyl group constituting this cellulose fiber is 0.4 to 2 mmol/g. This gas barrier material is described as having a high light transmittance.

Patent Document 2 below discloses a barrier material formed by coating a dispersion liquid on a substrate. The dispersion liquid is prepared by dispersing a cellulose nanofiber in a dispersion medium. The cellulose nanofiber has a crystallinity of 70% or more, a polymerization degree of 160 or less, and a fiber diameter of 50 nm or less. The polymerization degree is calculated from viscometry using a copper ethylenediamine solution. According to the description, the dispersion liquid coated on paper can impart lubricity as well as the oxygen barrier property.

The cellulose nanofiber described in the Patent Documents comprises cellulose nanofiber having a small fiber diameter and being present in a narrow distribution range, and the barrier material containing the cellulose nanofiber has transparency and lubricity. However, since it has low adhesion to a substrate formed from a hydrophobic resin such as polyester, there may arise a problem that the barrier property is degraded due to delamination.

Patent Document 3 discloses a laminate comprising an anchor layer arranged between a layer of cellulose nanofiber and a substrate of polyester resin or the like in order to improve adhesion between the cellulose nanofiber layer and the substrate. The anchor layer is formed from an emulsion resin containing at least one resin having a carboxyl group, a sulfonic acid group, an amino group or a hydroxyl group, and having a melting point of 60°C or more and 150°C or less.

Patent Document 4 describes a crystal oscillator microbalance biosensor used for a crystal oscillator microbalance comprising: a tabular quartz crystal; a metal thin film provided on both surfaces of the quartz crystal crystalline; a substrate provided on the surface of the quartz crystal and edged with the metal thin film; and a lignocellulose thin film provided on the surface of the substrate. The lignocellulose thin film is formed of lignocellulose fine fibers including cellulose, hemicellulose and lignin, and a single fiber of the lignocellulose fine fiber has a width of 3-50 nm and a length of 100 nm-10 µm.

Patent Document 5 describes a method for modifying at least one property of a solid film or coat comprising or consisting nanocrystalline cellulose.

Patent Document 6 describes a waterproof cellulose sheet that comprises a nonwoven fabric composed of fine cellulose fibers having a number average fiber diameter of 500 nm or less and satisfies all the following requirements (1) to (4): (1) a weight ratio of the fine cellulose fibers of 1 wt.% or more and 99 wt.% or less, (2) a porosity of 50% or more, (3) a tensile strength corresponding to a basis weight of 10 g/m of 6 N/15 mm or more, and (4) a ratio of dry tensile strength to wet tensile strength of 50% or more.

Patent Document 7 describes a particle having self-assembled nanocrystals, where the particle has a chiral nematic phase and the chiral nematic phase has a radial alignment within the particle, a dye composition comprising the particle, and methods for preparing the particle using fluidic techniques.

Patent Document 8 describes a gas barrier laminate that comprises, on a base material, a layer (A) comprising cellulose nanofiber having a carboxy group, and a layer (B) comprising a polyvalent metal compound, wherein the layer (A) and the layer (B) are in contact with each other, and the cellulose nanofiber in the layer (A) is subjected to ion cross-linking due to polyvalent metal ions derived from the polyvalent metal compound.

Non-patent Document 1 describes the production and modification of nanofibrillated cellulose using various mechanical processes.

### Prior Art Documents:

### Patent Documents:

[Patent Document 1]: JP 2009-57552 A
[Patent Document 2]: JP 2013-256546 A
[Patent Document 3]: JP 2014-79938 A
[Patent Document 4]: JP 2014-190744
[Patent Document 5]: WO 2017/199252
[Patent Document 6]: JP 2012-046843
[Patent Document 7]: WO 2018/033584
[Patent Document 8]: JP 2014-223737

### Non-patent Documents:

[Non-patent Document 1]: Abdul Khalil et al., Carbohydrate Polymers 2013, 99, 649-665.

### Summary of the Invention:

### Problems to be solved by the invention:

In the laminate of Patent Document 3, the interfacial strength between the substrate and the cellulose nanofiber layer is improved. However, delamination can occur when a large load is applied to the laminate, for instance, when the laminate is molded to a container. Namely, the laminate does not possess an interfacial adhesion strength enough for practical use.

Another problem is the difficulty in uniformly coating a coating liquid of the cellulose nanofiber. As a result, an expected gas barrier property cannot be imparted due to coating unevenness.

Accordingly, it is an object of the present invention to provide a product having a nanocellulose-containing layer, and a method for producing the same. The nanocellulose-containing layer has an excellent gas barrier property, and furthermore, when formed on a substrate, it exhibits a high interfacial peeling strength with respect to the substrate.

Another object of the present invention is to provide a laminate having a nanocellulose-containing layer imparted with an excellent gas barrier property and interlayer adhesion, and a method for producing the same.

### Means for solving the problems:

The present invention provides a product comprising a mixture of a multivalent cation resin and nanocellulose, wherein:
(a) the multivalent cation resin is at least one selected from polyethyleneimine, polyallylamine, polyamine polyamidoepichlorohydrin, polyamine epichlorohydrin, polyacrylamide, poly(diallyldimethylammonium salt), dicyandiamide formalin, poly (meth) acrylate, cationized starch, cationized gum, or chitosan;
(b) the nanocellulose is at least one of cellulose nanofiber oxidized by use of a TEMPO catalyst, or cellulose nanocrystal;
(c) the product contains 0.01 to 2.0 g of the multivalent cation resin when 1.0 g/m² of the nanocellulose as a solid is contained; and
(d) the mixture of the product is provided by forming a layer containing the nanocellulose on a layer of the multivalent cation resin so that the multivalent cation resin and the nanocellulose are mixed with each other.

It is preferable in the product of the present invention that:
1. the oxygen permeability at 23°C and 0% RH is less than 0.32 (cc/m²·day·atm) when the product contains 1.0 g/m² of the nanocellulose as a solid content;
2. the nanocellulose oxidized by use of the TEMPO catalyst is obtained by subjecting kraft pulp or a micronized cellulose to an oxidation treatment using the TEMPO catalyst and by subjecting to a defibration treatment;
3. the cellulose nanocrystal contains a sulfo group and/or a sulfate group in an amount of 0.01 to 2.0 mmol/g;
4. the multivalent cation resin is a water-soluble amine-containing polymer; and
5. the multivalent cation resin is polyethyleneimine.

The present invention further provides a laminate obtained by forming a barrier layer of the product on a substrate.

It is preferable in the laminate of the present invention that:
1. the substrate is formed of a resin containing a hydroxyl group and/or a carboxyl group;
2. an interfacial peeling strength, measured as described further below, between the barrier layer and the layer of the resin containing the hydroxyl group and/or the carboxyl group is not less than 2.3 (N/15mm); and
3. the resin containing the hydroxyl group and/or the carboxyl group is selected from the group consisting of a polyester resin, a regenerated cellulose, polyvinyl alcohol, and polyacrylic acid.

The present invention also provides a method for producing a laminate according to the present invention. The method comprises: a step of coating a solution containing a multivalent cation resin on a layer of a resin containing a hydroxyl group and/or a carboxyl group, and drying to form a layer of the multivalent cation resin; and a step of coating a nanocellulose-containing dispersion liquid on the layer of the multivalent cation resin, and drying to form a barrier layer containing the nanocellulose.

### Effect of the Invention

The product having the nanocellulose-containing layer of the present invention maintains its dense self-assembled structure among the nanocelluloses. And the multivalent cation resin of the product is spontaneously diffused and interposed between the nanocelluloses. More specifically, the cellulose nanofibers form the self-assembled structure due to the charge repulsion between the cellulose fibers, and this self-assembled structure becomes a barrier for the path of a permeated gas, whereby an excellent gas barrier property can be exhibited. In the product of the present invention, this self-assembled structure is further reinforced by the multivalent cation. Therefore, the gas barrier property is superior to that exhibited by the nanocellulose alone. Specifically, the oxygen permeability at 23°C and 0%RH is less than 0.32 (cc/m²·day·atm) when 1.0 g/m² of the nanocellulose is contained as a solid content.

Further, since the multivalent cation resin is present in the product, the adhesion strength on the interface between the substrate and the barrier layer is improved even when a laminate is formed by arranging a layer containing the multivalent cation resin and the nanocellulose (hereinafter, this may be called simply "barrier layer") on the substrate of a hydrophobic resin such as a polyester resin. That is, the interfacial fracture strength becomes 2.3 (N/15mm) or more, and delamination caused by an interfacial fracture is effectively prevented.

Examples described later indicate the following results. In a laminate formed by directly applying a nanocellulose-containing dispersion liquid on a substrate, a satisfactory oxygen barrier property is obtained. However, the interfacial peeling strength between the substrate and the barrier layer is inferior, and this can cause delamination (Comparative Example 1). In a laminate formed by coating a nanocellulose-containing dispersion liquid via an anchor layer, neither the oxygen barrier property nor the interfacial peeling strength is satisfactory (Comparative Example 2). In a laminate formed by mixing a nanocellulose-containing dispersion liquid and a solution containing the multivalent cation resin and coating the mixture on a substrate, the interfacial peeling strength may be satisfactory, but the oxygen barrier property is considerably degraded (Comparative Example 3).

On the other hand, in the laminate of the present invention, a layer of the multivalent cation resin is formed by coating on a substrate a solution containing the multivalent cation resin and drying the solution, and then, coating a nanocellulose-containing dispersion liquid thereon and drying to form a barrier layer. This laminate has an oxygen barrier property superior to that of Comparative Example 1, and furthermore, the interfacial peeling strength between the substrate and the barrier layer is 4.5 N/15mm, i.e., the interfacial peeling strength is higher than that of Comparative Example 3. This indicates that the delamination is effectively prevented (Examples 1 to 6).

### Brief Description of the Drawings:

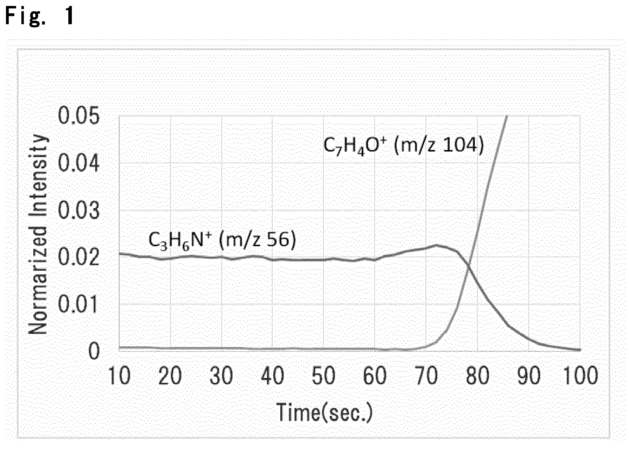

[Fig. 1]: a graph showing the result of component analysis of an example of the product of the present invention, the analysis being conducted by Time-of-Flight Secondary Ion Mass Spectrometry (TOF-SIMS).

### Mode for Carrying Out the Invention:

### (Product)

The product of the present invention is a composite product comprising a mixture of a multivalent cation resin and nanocellulose. The oxygen permeability at 23°C and 0%RH is less than 0.32 (cc/m²·day·atm) when 1.0 g/m² of nanocellulose as a solid content is contained. In other words, the product can exhibit an excellent oxygen barrier property. Further, when the product is formed on a substrate, the adhesion between the substrate layer and the product can be remarkably improved.

As described above, the product of the present invention cannot be formed from a mixed liquid prepared by mixing in advance a solution containing the multivalent cation resin and a nanocellulose-containing dispersion liquid. By forming a layer containing the nanocellulose on a layer of a multivalent cation resin, the product having a mixed state capable of exhibiting the above-mentioned gas barrier property and adhesion to a substrate can be formed. In other words, this can be provided only when the multivalent cation resin and the nanocellulose are mixed in a state where the self-assembled structure of the nanocellulose is maintained, though it is difficult to qualitatively or quantitatively express the mixed state in the product of the present invention.

This is demonstrated also by Fig. 1 that shows the results of the component analysis by TOF-SIMS for the product of the present invention. In other words, a layer of a solution containing the multivalent cation resin is formed on a polyester substrate, and a layer of a nanocellulose-containing dispersion liquid is formed thereon. In this case, C₃H₆N (m/z56) representing a fragment ion derived from the multivalent cation resin (polyethyleneimine) is present from the outermost surface of the barrier layer to the polyester substrate. In addition, the peak intensity of the fragment ion of nitrogen derived from the multivalent cation resin (polyethyleneimine) appears at a substantially constant rate from the outermost surface of the barrier layer to the polyester substrate. In the vicinity of the interface with the polyester substrate where the peak intensity of C₇H₄O (m/z104) representing a fragment ion derived from the polyester substrate (PET) appears, the intensity of the fragment ion of nitrogen derived from the multivalent cation resin (polyethyleneimine) becomes slightly higher. This indicates that the layer formed from the nanocellulose dispersion liquid and the layer formed from the multivalent cation resin solution, each of which is separately formed, form together a mixed layer without undergoing a mixing operation such as stirring.

In the product of the present invention, when 1.0 g/m² of the nanocellulose is contained as a solid content, the multivalent cation resin is contained in an amount of 0.01 to 2.0 g/m². When the amount of the multivalent cation resin is smaller than the above range, it is not possible to improve the interfacial peeling strength of the product of the present invention with respect to a hydrophobic substrate formed from a polyester resin, as compared with a case where the amount of the multivalent cation resin is in the above range. When the amount of the multivalent cation resin is larger than the above range, it may be impossible to improve the gas barrier property of the product as compared with the case where the amount is in the above range.

### (Nanocellulose)

As the nanocellulose of the present invention, at least one of cellulose nanofiber oxidized by use of a TEMPO catalyst, or cellulose nanocrystal is used. In particular, the four types of nanocellulose as described below can be used.
(1) Cellulose nanofiber with a small particle size and a narrow particle size distribution, produced by subjecting a cellulose material to an oxidation treatment using a TEMPO catalyst, and then by conducting a mechanical defibration;
(2) Cellulose nanofiber with a large average particle size and a wide particle size distribution, produced by micronizing in advance the cellulose material to prepare a micronized cellulose, subjecting the micronized cellulose to an oxidation treatment using the TEMPO catalyst, and then conducting defibration;
(3) Cellulose nanofiber having a large average particle size and a wide particle size distribution, prepared by adding cellulose nanocrystal to the cellulose nanofiber of the above (1) and conducting a dispersion treatment; and
(4) Cellulose nanocrystal containing a sulfo group and/or a sulfate group in an amount of 0.01-2.0 mmol/g.

It is preferable that the amount of carboxyl group in the cellulose nanofiber is in the range of 0.1 to 2.0 mmol/g. When the carboxyl group amount in the above range, it is possible to retain the crystal structure of the cellulose molecules, so that the cellulose nanofiber having high crystallinity is present in an effective amount to exhibit an excellent gas barrier property.

### [Cellulose material]

In the present invention, a cellulose-based material serving as the material of cellulose nanofiber can be a cellulose-based material conventionally used as the material of cellulose nanofiber. The examples include kraft pulp, wood pulp, non-wood pulp, cotton, and bacterial cellulose. Paper waste in a papermaking process can also be used. Among them, the kraft pulp is used preferably, though the present invention is not limited to these examples. The wood pulp may be either bleached or unbleached.

### [Micronization]

The cellulose nanofiber of the above (2) is micronized prior to the oxidation treatment of the cellulose, so that the variation in shape or the range of size of the cellulose nanofiber can be extended. The thus obtained cellulose nanofiber contains a simply isolated cellulose, so that the particle diameter distribution of the cellulose fiber can be made larger. Further, since the micronized cellulose has a large surface area, decomposition of the micronized cellulose is accelerated in a subsequent oxidation treatment, and viscosity of the reaction liquid after the oxidation treatment can be reduced. This can reduce the shearing force in the mechanical defibration treatment conducted after the oxidation treatment, whereby the average particle diameter of the cellulose fiber can be increased.

The micronization can be conducted by any conventionally known methods, specifically by using, for instance, an ultrahigh-pressure homogenizer, an ultrasonic homogenizer, a grinder, a high-speed blender, a bead mill, a ball mill, a jet mill, a disintegrator, a beater, and a biaxial extruder.

The micronization can be conducted in either a dry or a wet process. In the subsequent oxidation treatment, the micronized cellulose is preferably in a slurry state. Therefore, the cellulose is preferably micronized using an ultrahigh-pressure homogenizer, using water as the dispersion medium.

### [Oxidation treatment]

Cellulose materials such as kraft pulp or the micronized cellulose cause an oxidation reaction for oxidizing a hydroxyl group at position 6 of a cellulose glucose unit to a carboxyl group under conditions of an aqueous system, an ordinary temperature, and an ordinary pressure, by using a TEMPO catalyst (2,2,6,6-tetramethylpiperidine 1-oxyl).

Examples of the catalyst include TEMPO derivatives such as 4-acetamido TEMPO, 4-carboxy TEMPO, and 4-phosphonoxy TEMPO.

The use amount of the TEMPO catalyst is 0.01 to 100 mmol, preferably 0.01 to 5 mmol per gram of the micronized cellulose (dry basis).

During the oxidation treatment, it is preferable to use an oxidant or a co-oxidant such as a bromide or an iodide together with the TEMPO catalyst.

Examples of the oxidant include known oxidants such as halogen, hypohalous acid, halous acid, perhalogenic acid or salts thereof, halogen oxide and peroxide. Sodium hypochlorite or sodium hypobromite can be used particularly preferably. The amount of oxidant is set to 0.5 to 500 mmol, preferably 5 to 50 mmol per gram of the micronized cellulose (dry basis).

As the co-oxidant, an alkali metal bromide such as sodium bromide, or an alkali metal iodide such as sodium iodide can be suitably used. The amount of co-oxidant is set to 0.1 to 100 mmol, preferably 0.5 to 5 mmol per gram of the micronized cellulose (dry basis).

Further, it is preferable that the reaction medium of the reaction solution is water.

The reaction temperature (slurry temperature) in the oxidation treatment ranges from 1 to 50°C, in particular from 10 to 50°C, and it may be room temperature. The reaction time is preferably from 1 to 240 minutes, particularly from 60 to 240 minutes.

As the reaction proceeds, carboxyl groups are formed in cellulose, and this may lower the pH of the slurry. In order to efficiently make the oxidation reaction proceed, it is desirable to maintain the pH in the range of 9 to 12 using a pH adjusting agent such as sodium hydroxide.

After the oxidation treatment, the catalyst used in the treatment are removed by washing with water.

### [Defibration treatment]

After the oxidation treatment, the micronized cellulose is subjected to a defibration treatment.

The defibration treatment can be conducted by a method similar to the above-described micronization treatment. In the present invention, however, since it is desirable to use the cellulose nanofiber in the state of dispersion liquid, it is preferable to disperse the fiber in water before conducting the defibration treatment. For this reason, among the aforementioned mechanical micronization apparatuses, the ultrahigh-pressure homogenizer, the mixer, the grinder can be used preferably.

### [Cellulose nanocrystals]

The cellulose material is subjected to an acid hydrolysis treatment with concentrated sulfuric acid or concentrated hydrochloric acid so as to obtain cellulose nanocrystal as a rod-type cellulose crystal fiber. This cellulose nanocrystal has an average fiber diameter of 2 to 50 nm and an average fiber length of 100 nm to 500 nm, preferably an average fiber diameter of 2 to 15 nm and an average fiber length of 100 to 200 nm. The specific surface area is 90 to 900 m²/g, preferably 200 to 300 m²/g. The crystallinity is 70% or more, preferably 80% or more.

In the present invention, this cellulose nanocrystal can be used directly as the nanocellulose of the above (4). It is desirable that the cellulose nanocrystal contains a sulfo group and/or a sulfate group in an amount of 0.01 to 2.0 mmol/g in order to exhibit an excellent gas barrier property. In the present Description, the term "sulfate group" embraces the concept of a sulfate ester group.

When the cellulose nanocrystal is added as the nanocellulose of the above (3) to the cellulose nanofiber of the above (1), the cellulose nanocrystal can be added to the cellulose nanofiber of (1) such that the weight ratio of the cellulose nanofiber to the cellulose nanocrystal is 99.99: 0.01 to 50:50, preferably 99.99:0.01 to 90:10, and more preferably 99.99:0.01 to 95:5, before the dispersion treatment.

### [Dispersion treatment]

Since the cellulose nanofiber or the cellulose nanocrystal is preferably used in the state of a dispersion liquid, it is subjected to a dispersion treatment. For this treatment, a disperser such as an ultrahigh-pressure homogenizer, an ultrasonic disperser, a homogenizer, and a mixer can be used preferably. Alternatively, the liquid can be stirred with a stirring rod, a stirring stone.

The nanocellulose-containing dispersion liquid is prepared by defibration of the oxidized micronized cellulose or by adding the cellulose nanocrystal to the cellulose nanofiber. The dispersion liquid is an aqueous dispersion liquid with a solid content of 1% by mass, and has a viscosity in a range of 5 to 100000 mPa·s (measured with a rheometer at a temperature of 30°C). Since this dispersion liquid is easy to handle and apply, a gas barrier member described later can be easily produced.

The cellulose nanofiber of the above (2) contains cellulose fibers of various shapes and sizes, and the cellulose fibers include one that scatters light. The thus obtained aqueous dispersion liquid that contains 1% by mass of a solid content has haze in a range of 1.0 to 60. Namely, the haze is higher than that of a conventional cellulose nanofiber having a smaller average particle diameter. The cellulose nanofiber of (2) can be used to form a semi-transparent or an opaque film and it can impart an excellent masking effect.

### (Multivalent cation resin)

The multivalent cation resin used in the present invention is at least one selected from polyethyleneimine, polyallylamine, polyamine polyamidoepichlorohydrin, polyamine epichlorohydrin, polyacrylamide, poly(diallyldimethylammonium salt), dicyandiamide formalin, poly(meth)acrylate, cationized starch, cationized gum, and chitosan. Among them, the water-soluble amine-containing polymers (i.e. polyethyleneimine, polyallylamine, polyamine polyamidoepichlorohydrin, and polyamine epichlorohydrin), in particular polyethyleneimine can be used preferably. It is more preferable to use branched polyethylenimine, which is a water-soluble amine-containing polymer having an amino group.

### (Method for producing product and laminate)

The product of the present invention can be produced in a state of a specific mixture of the multivalent cation resin and the nanocellulose through steps of coating and drying a solution containing the multivalent cation resin so as to form a layer of the multivalent cation resin; and coating a dispersion liquid containing the nanocellulose on the layer of the multivalent cation resin and drying.

At this time, the solution containing the multivalent cation resin is coated on a substrate of a resin containing hydroxyl group and/or a carboxyl group in particular, whereby a laminate comprising a substrate on which a product of the nanocellulose and the multivalent cation resin can be produced. Alternatively, it is possible to coat and dry the solution containing the multivalent cation resin and the solution containing the nanocellulose in this order to form a cast film that can be used as a gas barrier film.

### [Coating and drying a solution containing multivalent cation resin]

The solution containing the multivalent cation resin preferably contains the resin in an amount of 0.01 to 30% by mass, particularly 0.1 to 10% by mass, in terms of the solid content. When the amount of the multivalent cation resin is smaller than the range, unlike the case where the multivalent cation resin is in the range, the gas barrier property and the interfacial peeling strength cannot be improved. Even when the amount of the multivalent cation resin is larger than the range, the gas barrier property and the interfacial peeling strength cannot be further improved, and this may degrade not only the economic performance but the coatability and the film formability.

Examples of the solvent used in the solution containing the multivalent cation resin include: water; alcohols such as methanol, ethanol, and isopropanol; ketones such as 2-butanone and acetone; aromatic solvents such as toluene; and, a mixed solvents of water and any of these components.

The coating amount of the solution containing the multivalent cation resin is determined according to the concentration of the solution containing the multivalent cation resin in terms of the amount of nanocellulose (solid content) in the layer formed from the below-mentioned nanocellulose-containing dispersion liquid. That is, when 1.0 g/m² of the nanocellulose (solid content) is contained, the solution is preferably coated so that 0.01 to 2.0 g/m² of the multivalent cation resin is contained.

Examples of coating methods include spray coating, immersion, or coating with a bar coater, a roll coater, or a gravure coater, though the present invention is not limited to these examples. The coated film is preferably dried under conditions at a temperature of 5 to 200°C and for 0.1 seconds to 24 hours. The drying treatment can be conducted by oven drying, infrared heating, or high-frequency heating. Alternatively, natural drying can be employed.

### [Coating and drying of nanocellulose-containing dispersion liquid]

The nanocellulose-containing dispersion liquid preferably contains the nanocellulose in an amount of 0.01 to 10% by mass, particularly 0.5 to 5.0% by mass, in terms of the solid content. When the content is smaller than the above range, the gas barrier property is inferior as compared with the case where the content is in the range. When the content is larger than the range, the coatability and the film formability become inferior as compared with the case where the content is in the range.

For the dispersion liquid, water can be used alone. Alternatively, the dispersion liquid may be a mixed solvent of water and alcohols such as methanol, ethanol, and isopropanol, ketones such as 2-butanone and acetone, or aromatic solvents such as toluene.

Any known additive can be blended in the solution containing the multivalent cation resin or the nanocellulose-containing dispersion liquid as required, and examples of the additive include filler, a colorant, an ultraviolet absorber, an antistatic agent, a waterproofing agent, a clay mineral, a crosslinking agent, a metal salt, colloidal silica, an alumina sol, titanium oxide, and fine particles.

It is preferable that the nanocellulose-containing dispersion liquid is coated so that the content of the nanocellulose (solid content) will be 0.1 to 3.0 g/m².

The method of coating and drying the nanocellulose-containing dispersion liquid can be conducted in a manner similar to the method of coating and drying the solution containing the multivalent cation resin. It is preferable to dry under conditions of a temperature of 5 to 200°C for 0.1 second to 24 hours.

### (Laminate)

The laminate of the present invention is obtained by forming a barrier layer of the product of the present invention on a substrate, more specifically, a layer (substrate) of a resin containing a hydroxyl group and/or a carboxyl group. Since the product of the present invention can improve the interfacial peeling strength even with respect to a layer of a hydrophobic resin, the interfacial peeling strength of the barrier layer and the layer (substrate) of the resin containing the hydroxyl group and/or the carboxyl group is 2.3 (N/15mm) or more. That is, delamination between the barrier layer and the substrate is effectively prevented.

The laminate is produced by the aforementioned process. That is, on a layer (substrate) of a resin containing a hydroxyl group and/or a carboxyl group, the aforementioned solution containing the multivalent cation resin is coated and dried to form a layer containing the multivalent cation resin. Then, on this layer, a nanocellulose-containing dispersion liquid is coated and dried, so that a barrier layer formed of a product as a mixture of the multivalent cation resin and the nanocellulose is formed on the layer (substrate) of the hydroxyl group and/or the carboxyl group.

A resin, or preferably, a resin containing a hydroxyl group and/or a carboxyl group is used to form a substrate as a film, a sheet, or a product having a shape of a bottle, a cup, a tray or a pouch. The substrate is produced by means of extrusion, injection molding, blow molding, stretch blow molding, or press molding.

Though the thickness of the substrate may vary depending on the shapes and applications of the laminate and cannot be defined generally, it is preferably in the range of 5 to 50 µm for a film.

Examples of the resins for the substrate include:
olefinic copolymers such as low-, medium- or high-density polyethylene, linear low-density polyethylene, polypropylene, ethylene-propylene copolymer, ethylene-butene-copolymer, ionomer, ethylene-vinyl acetate copolymer, and ethylene-vinyl alcohol copolymer;
aromatic polyesters such as polyethylene terephthalate, polybutylene terephthalate, polyethylene terephthalate/isophthalate, and polyethylene naphthalate;
aliphatic polyesters such as polylactic acid, polycaprolactone, and polybutylene succinate;
polyamides such as nylon 6, nylon 6,6, nylon 6,10, and methaxylylene azipamide;
styrene-based copolymers such as polystyrene, styrene-butadiene block copolymer, styrene-acrylonitrile copolymer, and acrylonitrile-butadiene-styrene copolymer (ABS resin) ;
vinyl chloride-based copolymers such as polyvinyl chloride, and vinyl chloride-vinyl acetate copolymers;
acrylic copolymers such as polymethyl methacrylate, and methyl methacrylate·ethyl acrylate copolymer;
thermoplastic resins such as polycarbonate;
cellulose-based resins such as acetyl cellulose, cellulose acetyl propionate, and cellulose acetate butyrate;
regenerated celluloses such as cellophane;
polyvinyl alcohol; and
polyacrylic acid. Among them, a resin containing a hydroxyl group and/or a carboxyl group is preferred. In particular, polyester resins, regenerated cellulose, polyvinyl alcohol, and polyacrylic acid can be preferably used.

If necessary, one or at least two kinds of additives such as a pigment, an antioxidant, an antistatic agent, an ultraviolet absorber and a lubricant may be blended in the resin to be a substrate, preferably a resin containing a hydroxyl group and/or a carboxyl group.

In the laminate of the present invention, further layer (s) may be arranged, if necessary, in addition to the layer formed of the above-described substrate and the product.

Since the gas barrier property of the nanocellulose-containing layer may deteriorate under high humidity conditions, it is preferable to form a further layer made of a conventionally known moisture-resistant resin such as an olefin resin or a polyester resin.

### Examples:

Examples of the present invention will be described below, though it should be noted that the present invention is not limited to these Examples.

The methods for measuring the respective items will be mentioned below.

### <Oxygen permeability>

Using an oxygen permeation tester (OX-TRAN2/22, manufactured by Mocon Co., Ltd.), the oxygen permeability (cc/m²·day·atm) of a product of a mixture containing a multivalent cation resin and nanocellulose was measured under conditions of 23°C and a humidity of 0%RH. Table 1 shows the results.

### <Interfacial peeling strength>

A support for a tensile test (50 µm of PET supplied as COSMOSHINE A4300 from TOYOBO CO., LTD.) was bonded to the barrier layer surface of the product of a mixture containing a multivalent cation resin and nanocellulose by dry-lamination with a polyurethane-based adhesive (polyol component: TAKELAC A315; isocyanate component: TAKENATE A50, manufactured by Mitsui Chemicals Inc.). After aging for 72 hours, the laminate was cut out into strips 15 mm wide and 10 cm long to obtain test pieces. The test pieces were subjected to 180° peeling at a tensile rate of 300 mm/min, and the adhesion strength (N/15mm) between a paper substrate and the laminated layer was measured. The test environment was 25°C and 50%RH. Table 1 shows the results.

### <Component analysis by TOF-SIMS>

A product of a mixture containing a multivalent cation resin and nanocellulose was cut into 1cm × 1cm squares and fixed to a specimen stage, with its barrier layer surface facing upward. In a TOF-SIMS analyzer (TRIFT V manufactured by ULVAC-PHI Inc.), the product was irradiated with primary ions (Bi₃²⁺), using Ar-gas cluster ions (Arₙ⁺) as etching ions. An analysis was conducted by setting the acceleration voltage of the primary ions to 30 KV and the measurement polarity to positive ions. The results are shown in Fig. 1.

### (Example 1)

### <Preparation of nanocellulose-containing dispersion liquid>

A dispersed fluid of pulp was subjected to mechanical defibration to prepare a micronized cellulose. To 10 g (solid amount) of this micronized cellulose, 0.8 mmol of a TEMPO catalyst (manufactured by Sigma Aldrich Co., Ltd.) and 12.1 mmol of sodium bromide were added, and further ion-exchange water was added thereto for filling a 1L volumetric flask, and the mixture was stirred to be uniformly dispersed. To the reaction system, 15 mmol of sodium hypochlorite per gram of the cellulose was added to initiate an oxidation reaction. During the reaction, the pH in the system was kept in a range of 10.0 to 10.5 with 0.5 N sodium hydroxide aqueous solution, and the oxidation reaction was carried out at 30°C for 4 hours. The oxidized cellulose was washed thoroughly to be neutral with ion-exchange water in a high-speed cooling centrifuge (16500 rpm, 10 minutes). Water was added to the washed cellulose to adjust to 1% by mass, and the mixture was subjected to defibration treatment with a mixer (7011JBB manufactured by Osaka Chemical Ind. Co., Ltd.) to obtain a nanocellulose-containing dispersion liquid.

### <Preparation of product of mixture containing multivalent cation resin and nanocellulose>

A product of a mixture containing a multivalent cation resin and nanocellulose was prepared by the following procedures.

A PET resin was laminated by extrusion to have a thickness of 30 µm on a paper substrate (basis weight: 250 g/m²), whereby a PET laminated paper was prepared. The PET surface of this PET laminated paper was corona-treated and coated with polyethyleneimine (PEI: EPOMIN P-1000 manufactured by Nippon Shokubai Co., Ltd.) by using a bar coater so that the coating amount as a solid content would be 0.6 g/m². This was dried to be solidified at 50°C for 10 minutes with a hot air dryer (MSO-TP manufactured by ADVANTEC CO., LTD.). After solidification, the dispersion liquid containing 1% by mass of nanocellulose was coated thereon using a bar coater, and the coated substrate was air-dried at room temperature overnight. The coating amount was 1.0 g/m² as a solid amount.

### (Example 2)

To 10 g (solid amount) of softwood kraft pulp, 0.8 mmol of a TEMPO catalyst (manufactured by Sigma Aldrich Co., Ltd.) and 12.1 mmol of sodium bromide were added, and further ion-exchange water was added thereto for filling a 1L volumetric flask, and the mixture was stirred to be uniformly dispersed. To the reaction system, 15 mmol of sodium hypochlorite per gram of the cellulose was added to initiate an oxidation reaction. During the reaction, the pH in the system was kept in a range of 10.0 to 10.5 with 0.5 N sodium hydroxide aqueous solution, and the oxidation reaction was carried out at 30°C for 4 hours. The oxidized cellulose was washed thoroughly to be neutral with ion-exchange water in a high-speed cooling centrifuge (16500 rpm, 10 minutes). Water was added to the washed cellulose to adjust to 1% by mass, and the mixture was subjected to defibration treatment with a mixer (7011JBB manufactured by Osaka Chemical Ind. Co., Ltd.) to obtain a nanocellulose-containing dispersion liquid. A product of a mixture containing the multivalent cation resin and nanocellulose was obtained in the same manner as in Example 1 except that a dispersion liquid containing 1% by mass of nanocellulose obtained in the aforementioned method was used.

### (Example 3)

Ion exchange water was added so that the solid content of the cellulose nanocrystal would be 1% by mass. The mixture was stirred for 2 hours with a stirrer and then subjected to a dispersion treatment for 30 minutes by ultrasonication, whereby a dispersion liquid containing 1% by mass of the nanocellulose was obtained. A product of a mixture containing the multivalent cation resin and the nanocellulose was obtained in the same manner as in Example 1 except that the dispersion liquid containing 1% by mass of nanocellulose was used for coating.

### (Example 4)

A product of a mixture containing a multivalent cation resin and nanocellulose was obtained in the same manner as in Example 1 except that the amount of the polyethyleneimine to be coated was modified to 1.2 g/m² as a solid content.

### (Example 5)

A product of a mixture containing a multivalent cation resin and nanocellulose was obtained in the same manner as in Example 1 except that the amount of the polyethyleneimine to be coated was modified to 0.06 g/m² as a solid content.

### (Example 6)

A product of a mixture containing a multivalent cation resin and nanocellulose was obtained in the same manner as in Example 1 except that the substrate was replaced by a biaxially stretched PET film (Lumirror P60, 12 µm manufactured by TORAY INDUSTRIES, INC.).

### (Comparative Example 1)

A product containing nanocellulose was obtained in the same manner as in Example 1, except that the multivalent cation resin was not used for coating.

### (Comparative Example 2)

A coating liquid was prepared by mixing a polyurethane aqueous dispersion liquid (SUPERFLEX 210, manufactured by DKS Co., Ltd.) and an epoxy-based crosslinking agent (Denacol-614B manufactured by Nagase Chemtex Corporation) at a ratio of 100:5. This liquid was coated on a PET laminated on paper that had been subjected to a corona treatment, so that the coating amount would be 0.6 g/m² as a solid content. The coated liquid was dried to be solidified at 50°C for 10 minutes with a hot air dryer (MSO-TP, manufactured by ADVANTEC Co., Ltd.). On this dried liquid, 1% by mass of the nanocellulose-containing dispersion liquid produced by the method of Example 1 was coated with a bar coater and air-dried at room temperature overnight. The coating amount was 1.0 g/m² as a solid content. In this manner, a product containing nanocellulose was obtained.

### (Comparative Example 3)

Polyethyleneimine was mixed with the nanocellulose-containing dispersion liquid produced by the method of Example 1 such that the weight ratio of the dispersion liquid to the polyethyleneimine would be 10:6 as the solid content. This mixture was stirred with a stirrer for 10 minutes to obtain a dispersion liquid containing both the polyethyleneimine and the nanocellulose. The PET of the PET laminated paper was corona-treated and coated with the dispersion liquid containing both the polyethyleneimine and the nanocellulose so that the coating amount would be 1.6 g/m² as a solid content, whereby a product containing the polyethyleneimine and the nanocellulose was obtained.

### (Comparative Example 4)

A product containing nanocellulose was obtained in the same manner as in Example 2, except that the multivalent cation resin was not used for coating.

### (Comparative Example 5)

A product containing nanocellulose was obtained in the same manner as in Example 3, except that the multivalent cation resin was not used for coating.

### (Comparative Example 6)

A product containing nanocellulose was obtained in the same manner as in Example 6, except that the multivalent cation resin was not used for coating.

**[Table 1]**

| | Substrate | Nanocellulose-containing dispersion liquid | Resin coated on PET surface | Resin coating amount [g/m²] | Oxygen permeability for 1g/m² of nanocellulose [cc/m²·day·atm] | Interfacial peeling strength of product [N/15mm] |
|---|---|---|---|---|---|---|
| Ex.1 | PET-laminated paper | Dispersion liquid 1 | PEI | 0.6 | 0.13 | 4.5 |
| Ex.2 | PET-laminated paper | Dispersion liquid 2 | PEI | 0.6 | 0.17 | 4.9 |
| Ex.3 | PET-laminated paper | Dispersion liquid 3 | PEI | 0.6 | 0.31 | 4.9 |
| Ex.4 | PET-laminated paper | Dispersion liquid 1 | PEI | 1.2 | 0.08 | 4.9 or more |
| Ex.5 | PET-laminated paper | Dispersion liquid 1 | PEI | 0.06 | 0.07 | 3.5 |
| Ex.6 | Biaxially stretched PET film | Dispersion liquid 1 | PEI | 0.6 | 0.03 | 4.9 or more |
| Com. Ex.1 | PET-laminated paper | Dispersion liquid 1 | None | - | 0.18 | 0.8 |
| Com. Ex.2 | PET-laminated paper | Dispersion liquid 1 | Polyurethane | 0.6 | 3.8 | 3.0 |
| Com. Ex.3 | PET-laminated paper | Dispersion liquid 1 | PEI ¹⁾ | 0.6 | 29 | 4.9 or more |
| Com. Ex.4 | PET-laminated paper | Dispersion liquid 2 | None | - | 0.22 | 2.2 |
| Com. Ex.5 | PET-laminated paper | Dispersion liquid 3 | None | - | 6.6 | 0.3 |
| Com. Ex.6 | Biaxially stretched PET film | Dispersion liquid 1 | None | - | 0.03 | 1.5 |

| | | | | | | |
|---|---|---|---|---|---|---|
| *Dispersion 1: nanocellulose-containing dispersion liquid obtained by subjecting micronized cellulose to oxidation reaction in the presence of TEMPO catalyst and defibrating Dispersion 2: nanocellulose-containing dispersion liquid obtained by subjecting kraft pulp to oxidation reaction in the presence of TEMPO catalyst and defibrating Dispersion 3: nanocellulose-containing dispersion liquid obtained by dispersing cellulose nanocrystal PEI¹⁾: Dispersion 1 mixed with PEI is coated Ex.: Example; Com.Ex.: Comparative Example | | | | | | |

### Industrial Applicability:

The product of the present invention has an excellent gas barrier property and also has a high interfacial peeling strength with respect to a substrate of a hydrophobic thermoplastic resin such as polyester, and thus, the product is formed on a substrate of a resin containing a hydroxyl group and/or a carboxyl group and is suitably used as a gas barrier laminate substantially free from delamination.

## Claims

1. A product comprising a mixture of a multivalent cation resin and nanocellulose, wherein:
(a) the multivalent cation resin is at least one selected from polyethyleneimine, polyallylamine, polyamine polyamidoepichlorohydrin, polyamine epichlorohydrin, polyacrylamide, poly(diallyldimethylammonium salt), dicyandiamide formalin, poly(meth)acrylate, cationized starch, cationized gum, or chitosan;
(b) the nanocellulose is at least one of cellulose nanofiber oxidized by use of a TEMPO catalyst, or cellulose nanocrystal;
(c) the product contains 0.01 to 2.0 g of the multivalent cation resin when 1.0 g/m² of the nanocellulose as a solid is contained; and
(d) the mixture is provided by forming a layer containing the nanocellulose on a layer of the multivalent cation resin so that the multivalent cation resin and the nanocellulose are mixed with each other.

2. The product according to claim 1, wherein the oxygen permeability at 23°C and 0% RH, measured according to the method in the description, is less than 0.32 (cc/m²·day·atm) when the product contains 1.0 g/m² of the nanocellulose as a solid content.

3. The product according to claim 1 or 2, wherein the nanocellulose oxidized by use of the TEMPO catalyst is obtained by subjecting kraft pulp or a micronized cellulose to an oxidation treatment using the TEMPO catalyst and by subjecting to a defibration treatment.

4. The product according to claim 1 or 2, wherein the cellulose nanocrystal contains a sulfo group and/or a sulfate group in an amount of 0.01 to 2.0 mmol/g.

5. The product according to any one of claims 1 to 4, wherein the multivalent cation resin is a water-soluble amine-containing polymer.

6. The product according to any of claims 1 to 5, wherein the multivalent cation resin is polyethyleneimine.

7. A laminate comprising a barrier layer of the product according to any one of claims 1 to 6, the barrier layer being formed on a substrate.

8. The laminate according to claim 7, wherein the substrate comprises a resin containing hydroxyl group and/or a carboxyl group.

9. The laminate according to claim 8, wherein an interfacial peeling strength, measured according to the method in the description, between the barrier layer and the layer of the resin containing the hydroxyl group and/or the carboxyl group is not less than 2.3 (N/15mm).

10. The laminate according to claim 8 or 9, wherein the resin containing the hydroxyl group and/or the carboxyl group is selected from the group consisting of a polyester resin, regenerated cellulose, polyvinyl alcohol, and polyacrylic acid.

11. A method for producing a laminate according to any one of claims 8 to 10, comprising:
coating a solution containing a multivalent cation resin on a layer of a resin containing a hydroxyl group and/or a carboxyl group, and drying to form a layer of the multivalent cation resin; and
coating a nanocellulose-containing dispersion liquid on the layer of the multivalent cation resin, and drying to form a barrier layer containing the nanocellulose.

## Patentansprüche

1. Produkt, umfassend ein Gemisch aus einem mehrwertigen Kationenharz und Nanocellulose, wobei:
(a) das mehrwertige Kationenharz wenigstens eines ist, das aus Polyethylenimin, Polyallylamin, Polyaminpolyamidoepichlorohydrin, Polyaminepichlorhydrin, Polyacrylamid, Poly(diallyldimethylammoniumsalz), Dicyandiamidformalin, Poly(meth)acrylat, kationisierter Stärke, kationisiertem Gummi oder Chitosan ausgewählt ist;
(b) die Nanocellulose wenigstens eine von Cellulosenanofasern, die unter Verwendung eines TEMPO-Katalysators oxidiert wurden, oder Cellulosenanokristall ist;
(c) das Produkt 0,01 bis 2,0 g des mehrwertigen Kationenharzes enthält, wenn 1,0 g/m² der Nanocellulose als Feststoff enthalten ist; und
(d) das Gemisch durch Ausbilden einer Schicht, die Nanocellulose enthält, auf einer Schicht des mehrwertigen Kationenharzes bereitgestellt wird, sodass das mehrwertige Kationenharz und die Nanocellulose miteinander vermischt werden.

2. Produkt nach Anspruch 1, wobei die Sauerstoffdurchlässigkeit bei 23 °C und 0 % RH, gemessen nach dem Verfahren in der Beschreibung, kleiner ist als 0,32 (cc/m²·Tag·atm), wenn das Produkt 1,0 g/m² der Nanocellulose als Feststoffgehalt enthält.

3. Produkt nach Anspruch 1 oder 2, wobei die Nanocellulose, die unter Verwendung des TEMPO-Katalysators oxidiert wird, durch Unterziehen von Kraftzellstoff oder mikronisierter Cellulose einer Oxidationsbehandlung unter Verwendung des TEMPO-Katalysators und durch Unterziehen einer Zerfaserungsbehandlung erhalten wird.

4. Produkt nach Anspruch 1 oder 2, wobei der Cellulosenanokristall eine Sulfogruppe und/oder eine Sulfatgruppe in einer Menge von 0,01 bis 2,0 mmol/g enthält.

5. Produkt nach einem der Ansprüche 1 bis 4, wobei das mehrwertige Kationenharz ein wasserlösliches, aminhaltiges Polymer ist.

6. Produkt nach einem der Ansprüche 1 bis 5, wobei das mehrwertige Kationenharz Polyethylenimin ist.

7. Laminat, umfassend eine Sperrschicht des Produkts nach einem der Ansprüche 1 bis 6, wobei die Sperrschicht auf einem Substrat ausgebildet ist.

8. Laminat nach Anspruch 7, wobei das Substrat ein Harz umfasst, das eine Hydroxylgruppe und/oder eine Carboxylgruppe enthält.

9. Laminat nach Anspruch 8, wobei eine nach dem Verfahren in der Beschreibung gemessene Grenzflächenablösefestigkeit zwischen der Sperrschicht und der Schicht des Harzes, das die Hydroxylgruppe und/oder die Carboxylgruppe enthält, nicht weniger als 2,3 (N/15 mm) beträgt.

10. Laminat nach Anspruch 8 oder 9, wobei das Harz, das die Hydroxylgruppe und/oder die Carboxylgruppe enthält, aus der Gruppe ausgewählt ist, bestehend aus einem Polyesterharz, regenerierter Cellulose, Polyvinylalkohol und Polyacrylsäure.

11. Verfahren zum Herstellen eines Laminats nach einem der Ansprüche 8 bis 10, umfassend:
Beschichten einer Lösung, die ein mehrwertiges Kationenharz enthält, auf eine Schicht eines Harzes, das eine Hydroxylgruppe und/oder eine Carboxylgruppe enthält, und Trocknen, um eine Schicht des mehrwertigen Kationenharzes auszubilden; und
Beschichten einer nanocellulosehaltigen Dispersionsflüssigkeit auf der Schicht des mehrwertigen Kationenharzes und Trocknen, um eine Sperrschicht auszubilden, die Nanocellulose enthält.

## Revendications

1. Produit comprenant un mélange d'une résine cationique multivalente et de nanocellulose, dans lequel :
(a) la résine cationique multivalente est au moins l'une sélectionnée parmi la polyéthylèneimine, la polyallylamine, la polyamine polyamidoépichlorhydrine, la polyamine épichlorhydrine, le polyacrylamide, le poly(sel de diallyldiméthylammonium), la dicyandiamideformaline, le poly(méth)acrylate, l'amidon cationisé, la gomme cationisée, ou le chitosane ;
(b) la nanocellulose est au moins l'un parmi une nanofibre de cellulose oxydée à l'aide d'un catalyseur TEMPO, ou un nanocristal de cellulose ;
(c) le produit contient de 0,01 à 2,0 g de résine cationique multivalente lorsque 1,0 g/m² de la nanocellulose sous forme de matière sèche est contenu ; et
(d) le mélange est fourni par formation d'une couche contenant la nanocellulose sur une couche de la résine cationique multivalente de sorte que la résine cationique multivalente et la nanocellulose sont mélangées l'une à l'autre.

2. Produit selon la revendication 1, dans lequel la perméabilité à l'oxygène à 23 °C et 0 % HR, mesurée selon le procédé de la description, est inférieure à 0,32 (cm³/m²·jour·atm) lorsque le produit contient 1,0 g/m² de la nanocellulose en tant que teneur en matière sèche.

3. Produit selon la revendication 1 ou 2, dans lequel la nanocellulose oxydée par l'utilisation du catalyseur TEMPO est obtenue par soumission de pâte kraft ou d'une cellulose micronisée à un traitement d'oxydation à l'aide du catalyseur TEMPO et par soumission à un traitement de défibrage.

4. Produit selon la revendication 1 ou 2, dans lequel le nanocristal de cellulose contient un groupe sulfo et/ou un groupe sulfate dans une quantité de 0,01 à 2,0 mmol/g.

5. Produit selon l'une quelconque des revendications 1 à 4, dans lequel la résine cationique multivalente est un polymère contenant une amine soluble dans l'eau.

6. Produit selon l'une quelconque des revendications 1 à 5, dans lequel la résine cationique multivalente est la polyéthylèneimine.

7. Stratifié comprenant une couche barrière du produit selon l'une quelconque des revendications 1 à 6, la couche barrière étant formée sur un substrat.

8. Stratifié selon la revendication 7, dans lequel le substrat comprend une résine contenant un groupe hydroxyle et/ou un groupe carboxyle.

9. Stratifié selon la revendication 8, dans lequel une résistance au pelage interfacial, mesurée selon le procédé de la description, entre la couche barrière et la couche de la résine contenant le groupe hydroxyle et/ou le groupe carboxyle n'est pas inférieure à 2,3 (N/15 mm).

10. Stratifié selon la revendication 8 ou 9, dans lequel la résine contenant le groupe hydroxyle et/ou le groupe carboxyle est sélectionnée dans le groupe constitué d'une résine polyester, de cellulose régénérée, de poly alcool vinylique et de polyacide acrylique.

11. Procédé de fabrication d'un stratifié selon l'une quelconque des revendications 8 à 10, comprenant :
le dépôt d'une solution contenant une résine cationique multivalente sur une couche d'une résine contenant un groupe hydroxyle et/ou un groupe carboxyle, et le séchage pour former une couche de résine cationique multivalente ; et
le dépôt d'un liquide de dispersion contenant une nanocellulose sur la couche de la résine cationique multivalente, et le séchage pour former une couche barrière contenant la nanocellulose.
